# EUROPÄISCHE PATENTSCHRIFT

(11) **EP 3 693 723 B1**
(45) Veröffentlichungstag und Bekanntmachung des Hinweises auf die Patenterteilung: **20.07.2022**
(21) Anmeldenummer: 20000048.7
(22) Anmeldetag: 30.01.2020
(51) Int. Cl.: G01N 17/04, G01K 1/16, G01K 13/02, G01K 13/024, G01N 3/56

(54) **SONDE ZUR MESSUNG DER VERÄNDERUNG VON WERKSTOFFEN DURCH GASSTRÖME IN DAMPFERZEUGERN ODER ANDEREN VERBRENNUNGSANLAGEN**
PROBE FOR MEASURING THE CHANGE IN MATERIALS BY GAS STREAMS IN STEAM GENERATORS OR OTHER COMBUSTION PLANTS
SONDE DE MESURE DU CHANGEMENT DES MATIÈRES À L'AIDE DE FLUX DE GAZ DANS LES GÉNÉRATEURS DE VAPEUR OU AUTRES INSTALLATIONS DE COMBUSTION

(30) Priorität: 06.02.2019 DE 102019000925
(43) Veröffentlichungstag der Anmeldung: 12.08.2020
(73) Patentinhaber: Uhlig Wel-Cor GmbH, 38685 Langelsheim (DE)
(72) Erfinder: GERNER, Konrad, 38640 Goslar (DE)
(74) Vertreter: Findeisen Neumann Scheit Partnerschaft mbB

(56) Entgegenhaltungen:
- DE-B3-102013 007 529
- US-A1- 2015 362 415

## Beschreibung

Die Erfindung betrifft eine Sonde zur Messung der Veränderung von Werkstoffen durch Gasströme in Dampferzeugern oder anderen Verbrennungsanlagen, wobei die Sonde einen Temperiermittelzuflusskanal, einen Temperiermittelabflusskanal, eine Werkstoffprobenaufnähme für eine Werkstoffprobe und einen Kühlkörper aufweist und wobei der Kühlkörper auf einer den Gasströmen abgewandten Innenseite der Werkstoffprobe angeordnet und thermisch mit dieser verbunden ist.

Die Innenwände eines Dampferzeugers und anderer Verbrennungsanagen, Reaktoren Konverter, Wärmetauscher etc. z.B. in Kraftwerken und der Stahl- und chemischen Industrie etc. sind im Betrieb hohen Temperaturen und aggressiven Ab- und Rauchgasen, oder spezifischen chemischen Fluiden (gasförmig oder flüssig, mit Partikeln beladen oder mehrphasig) ausgesetzt. Aus den Ab- und Rauchgasen lagern sich auf den Oberflächen der Innenwände korrosive Salze und inerte Aschen ab, wobei diese Ablagerungen dann zu einer Schädigung der Innenwände durch Korrosion führen. In anderen Anlagen werden harte Partikel gegen die Innenwände geschleudert und durch Abrasion abgetragen, oder durch Korrosion entstandene Deckschichten mit den Salzen und Aschen werden durch Erosion abgetragen. Für eine Optimierung der für die Innenwände eingesetzten Werkstoffe ist das Verständnis der temperaturabhängigen Korrosions-, Abrasions- und Erosionsmechanismen notwendig. Hierzu werden Sonden mit zu prüfenden Werkstoffproben im laufenden Dampferzeuger exponiert. Die Sonden sind dabei so ausgebildet, dass die Werkstoffproben definiert kühlbar sind.

Aus dem Stand der Technik sind verschiedene Sonden bekannt. Beispielsweise wird in DE 10 2013 007 529 B3 eine Vorrichtung zur Messung der Veränderung von Werkstoffen durch Gasströme vorgeschlagen. Diese Vorrichtung weist ein aus dem zu prüfenden Werkstoff gebildetes Außenrohrs als Werkstoffprobe und eine in diesem Rohr axial angeordnete Fluidleitung auf. Das Rohr ist an einer Stirnseite geschlossen. Über die Fluidleitung wird ein Temperiermittel auf die Innenfläche der verschlossenen Stirnseite des Rohrs geleitet, umgelenkt und in dem Kanal zwischen Rohr und Fluidleitung wieder aus dem Rohr herausgeführt. Der Fluidstrom im Kanal kühlt damit den Mantel des Rohrs und wirkt damit der Wärmeeinwirkung durch die Rauchgase entgegen. Durch die zunehmende Erwärmung des Temperiermittels beim Ableiten entsteht auf dem Rohrmantel ein Temperaturgradient, sodass die Korrosion für verschiedene Temperaturregime untersucht werden kann. Da aber das Temperiermittel den Kanal unkontrolliert durchströmt, dessen Querschnitt zudem durch Kabel und zugehörige Kabelbinder der Temperaturmessung innerhalb der Werkstoffprobe verengt wird, bildet sich eine turbulente Strömung zwischen Werkstoffprobe und Fluidleitung aus. Dies verhindert eine gleichmäßige Kühlung der Werkstoffprobe über deren gesamte Fläche, sowie während der Dauer des Tests. Zudem verändern die sich Eigenschaften des Belags, der sich auf der Außenseite der Werkstoffprobe während der Dauer des Tests bildet, entweder stetig oder unstetig (Belagsdicke, -dichte, Wärmeleitfähigkeit, endotherme oder exotherme chemische reaktionen im Belag etc.). Dementsprechend verändert sich der Wärmeübergang vom Ab- oder Rauchgas in den Belag hinein und durch ihn hindurch bis in die von innen gekühlte Werkstoffprobe. Das bedeutet, dass zwar die Temperatur der Werkstoffprobe an einem einzelnen Regelpunkt relativ konstant gehalten werden kann, aber der Abstand der sich danach ausbreitenden Isograden des eigentlich angestrebten, konstanten Temperaturgradienten wird entweder schrumpfen oder sich spreizen, sodass sich kein kontinuierlicher Temperaturgradient in oder auf der Werkstoffprobe einstellen kann. Das bedeutet, dass auch die Temperaturen auf der Innenseite der Werkstoffprobe nicht immer mit den Temperaturen der Außenseite des Rohrs korrelieren können, d.h. höhere oder niedrigere Temperaturen die eigentlich beabsichtigte Abbildung der Korrosions-, Abrasions- und Erosionsprozesse und das Verhalten des Werkstoffs unkontrollierbar und unstetig verändern.

DE 10 2009 053 719 A1 beschreibt eine Korrsosionssonde zur elektrochemischen Messung der Korrosionsrate. Diese Korrsosionssonde besteht aus einer Lanze mit einem Lanzenkopf. Der Lanzenkopf dient als Halter für eine kreisflächige Werkstoffprobe, die mit der Lanze in einen Dampferzeuger einführbar ist. Die Lanze wird aus einem Innenrohr, einem Mittelrohr und einem Außenrohr gebildet. Das Innenrohr dient als Kabelführung des elektrischen Anschlusses der Teilsegmente der Werkstoffprobe. Über einen ersten Anschluss ist ein Temperiermittel in den Kanal zwischen Innenrohr und Mittelrohr einführbar. In diesem Kanal fließt das Temperiermittel bis zum Lanzenkopf, wird dort umgelenkt und fließt über den Kanal zwischen Mittelrohr und Außenrohr zum zweiten Anschluss, wo es die Lanze verlässt. Durch den Temperiermittelstrom wird der Lanzenkopf mit der daran befestigten Werkstoffprobe gekühlt. Zur Verbesserung des Wärmestroms im Lanzenkopf ist am Übergang zwischen beiden Kanälen ein Kühlkörper vorgesehen. Dieser Kühlkörper weist Flossen oder Zähne auf, die sich in den Temperiermittelstrom hinein erstrecken, sodass der Wärmeübergang zwischen Temperiermittel und Lanzenkopf und damit zu der an dem Lanzenkopf angebrachten Werkstoffprobe verbessert wird. Der Kühlkörper ist vorzugsweise aus Kupfer gebildet und stellt sicher, dass ein ausreichend hoher Wärmestrom von dem Lanzenkopf abgeführt werden kann. Durch den im Querschnitt ringförmig ausgebildeten Kanal zwischen Innenrohr und Mittelrohr ist es auch bei dieser Lösung nachteilig, dass das Temperiermittel unkontrolliert zum Lanzenkopf geführt wird und sich damit im Querschnitt entlang des Rings ein ungewollter Temperaturgradient einstellt. Weiterhin ist an der am Lanzenkopf befindlichen Stirnseite des Innenrohrs kein Kühlkörper vorgesehen, sodass der hierzu zugeordnete Bereich der Werkstoffprobe nicht direkt mit dem Kühlkörper verbunden ist. Durch die ringförmige Ausbildung des Kühlkörpers wird die Wärmenergie nur unzureichend von der kreisflächig ausgebildeten Werkstoffprobe abgeführt, sodass der Messbereich der Werkstoffprobe nur ungleichmäßig gekühlt wird.

Aufgabe der Erfindung ist es daher, eine Sonde zu schaffen, bei der eine homogene Temperierung der Werkstoffprobe sichergestellt wird.

Diese Aufgabe wird erfindungsgemäß bei einer gattungsgemäßen Sonde mit den Merkmalen des Anspruchs 1 gelöst. Vorteilhafte Ausgestaltungen sind in den Ansprüchen 2 bis 10 aufgezeigt.

Durch die vollflächige thermische Verbindung zwischen Kühlkörper und Innenseite der Werkstoffprobe wird die Wärmeenergie, die über die Gasströme an die Werkstoffprobe übertragen wird, über die gesamte Fläche der Innenseite gleichmäßig von dem Kühlkörper abtransportiert. Die Wärmeenergie vom Kühlkörper wiederum wird durch das beaufschlagte Temperiermittel abgeführt. Durch die gleichmäßige Kühlung der Werkstoffprobe wird auch ein homogener Wärmestrom entlang der auf der den Gasströmen zugewandten Seite der Werkstoffprobe aufwachsenden Beschichtung erreicht.

Mit der sich in Strömungsrichtung verjüngenden Düsenanordnung ist ein zielgerichtetes Zuführen des Temperiermittels auf den Kühlkörper möglich. Sofern das Temperiermittel Druckluft ist, wird deren Temperatur beim Ausströmen aus der Düsenanordnung durch die Expansion an der Düsenanordnung nochmals verringert (Joule-Thomson-Effekt).

Die Bildung des Kühlkörpers aus massivem Wärmeleitteil und Kühlrippen hat den Vorteil, dass das Wärmeleitteil an die Form der Innenseite der Werkstoffprobe anpassbar ist und damit ein optimaler Wärmetransfer von der Werkstoffprobe zum Wärmeleitteil ermöglicht wird. Die Kühlrippen bieten beim Umströmen durch das Temperiermittel eine große Oberfläche, sodass die vom Wärmeleitteil aufgenommene Wärmeenergie vollständig vom Temperiermittel abgeführt werden kann.

Zur Regelung des Temperaturmittelzuflusses und damit der Temperatur der Werkstoffprobe können die im Wärmeleitteil in den Aufnahmen angeordneten und an der Innenseite der Werkstoffprobe anliegenden Temperatursensoren verwendet werden. Diese Temperatursensoren können beispielswiese Thermoelemente sein. Darüber hinaus können die von den Temperatursensoren erfassten Temperaturen protokolliert werden.

Durch die in Richtung Gasströme gewölbte Oberfläche der Werkstoffprobe können auch richtungsabhängige Korrosionsprozesse aufgelöst werden.

Die erfindungsgemäße Sonde ist sowohl an ebenen Wandflächen, als auch an gekrümmten Wandflächen (z.B. Wandfläche einer Rohrinnenwand) einsetzbar

Nachfolgend wird ein Ausführungsbeispiel der Erfindung anhand der Zeichnungen erläutert. Es zeigen:
- Fig. 1: eine perspektivische Ansicht einer Ausführung einer erfindungsgemäßen Sonde
- Fig. 2: eine Seitenansicht der Ausführung gemäß Fig. 1
- Fig. 3: eine um 90° gedrehte Seitenansicht gemäß Fig. 2
- Fig. 4: eine Schnittdarstellung entlang der Schnittlinie A-A gemäß Fig. 2
- Fig. 5: eine Schnittdarstellung entlang der Schnittlinie B-B gemäß Fig. 3
- Fig. 6: eine Detaildarstellung des Ausschnitts C gemäß Fig. 4

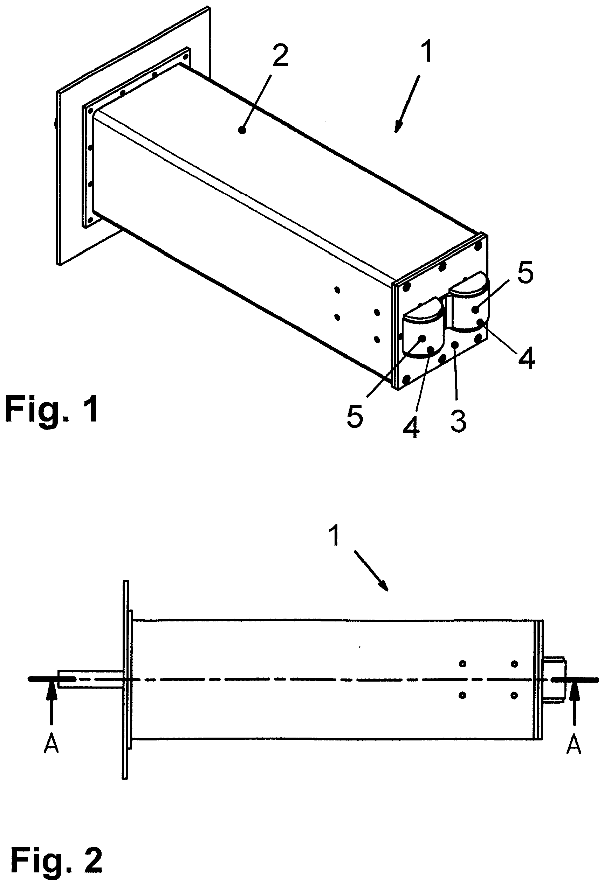

**Fig. 1** zeigt eine perspektivische Ansicht einer Ausführung einer erfindungsgemäßen Sonde 1 zur Messung der Veränderung von Werkstoffen durch Gasströme in einem Dampferzeuger. Die Sonde 1 weist ein Gehäuse 2 auf, wobei eine Stirnseite 3 der Sonde 1 bei der Verwendung im Dampferzeuger den Gasströmen zugewandt und damit diesen Gasströmen ausgesetzt ist. An dieser Stirnseite 3 ist eine Ausnehmung zur Aufnahme zweier Werkstoffproben 4 vorgesehen. Die Werkstoffproben 4 weisen je einen Messbereich 5 auf, wobei die Werkstoffproben 4 in jedem Messbereich 5 eine in Richtung Gasströme gewölbte Oberfläche aufweist.

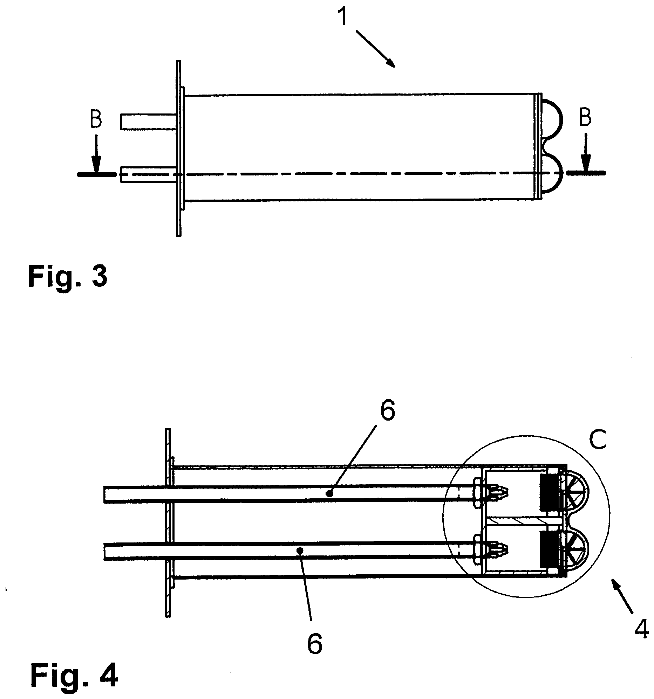

In **Fig. 2** ist eine Seitenansicht der Ausführung gemäß **Fig. 1****.** **Fig. 3** stellt eine um 90° gedrehte Seitenansicht gemäß **Fig. 2** dar.

**Fig. 4** zeigt eine Schnittdarstellung entlang der Schnittlinie A-A gemäß **Fig. 2****.** In das Gehäuse 2 sind zwei Temperiermittelzuflusskanäle 6 geführt, wobei diese Temperiermittelzuflusskanäle 6 als Rohrleitungen ausgebildet sind. Über diese Rohrleitungen ist ein Temperiermittel in Richtung Werkstoffprobe 4 führbar. Die Werkstoffprobe wird damit parallel zur Längsachse des Gehäuses angeströmt.

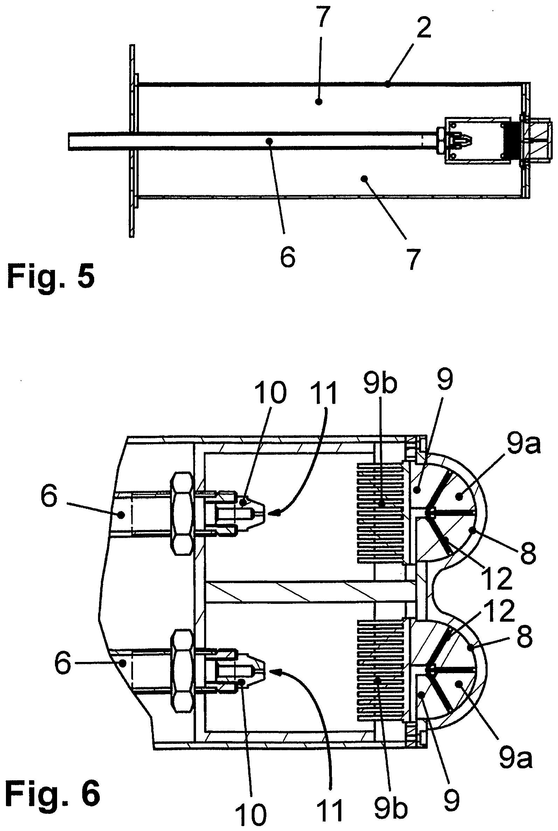

**Fig. 5** zeigt eine Schnittdarstellung entlang der Schnittlinie B-B gemäß **Fig. 3****.** Neben den Temperiermittelzuflusskanälen 6 wird von einer Innenfläche des Gehäuses 2 der Sonde 1 und einer Außenmantelfläche der Rohrleitung 6 ein Temperiermittelabflusskanal 7 gebildet.

In **Fig. 6** ist eine Detaildarstellung des Ausschnitts C gemäß **Fig. 4** zu sehen. Auf einer den Gasströmen abgewandten Innenseite 8 der Werkstoffprobe 4 ist ein Kühlkörper 9 angeordnet. Dieser Kühlkörper 9 ist in dem jeweiligen Messbereich 5 vollflächig thermisch mit der Innenseite 8 der Werkstoffprobe 4 verbunden. In der dargestellten Ausführung wird die thermische Verbindung dadurch erreicht, dass der Kühlkörper 9 in dem Messbereich vollflächig an der Innenseite 8 des Messbereichs 5 anliegt. Die thermische Verbindung könnte aber auch über ein Wärmekoppelmedium (beispielsweise Wärmeleitpaste) erfolgen, welches vollflächig thermisch mit der Innenseite 8 des Messbereichs 5 der Werkstoffprobe 4 und dem Kühlkörper 9 verbunden ist. Ein derartiges Wärmekoppelmedium ist allerdings nicht dargestellt.

Ein dem Kühlkörper 9 zugewandtes Ende jedes Temperiermittelzuflusskanals 6 ist mit einer sich in Strömungsrichtung verjüngenden Düsenanordnung 10 ausgebildet, wobei eine Düsenöffnung 11 dieser Düsenanordnung 10 in Richtung Kühlkörper 9 ausgerichtet ist. Der Kühlkörper 9 weist auf einer der Innenseite 8 der Werkstoffprobe 4 zugewandten Seite ein massives Wärmeleitteil 9a und auf einer der Düsenöffnung 11 zugewandten Seite Kühlrippen 9b auf. Die Kühlrippen 9b sind in Richtung Düsenöffnung 11 ausgerichtet. Das über den Temperiermittelzuflusskanal 6 zugeführte Temperiermittel (beispielsweise Druckluft) wird von der Düsenöffnung 11 in Richtung Kühlrippen 9b geführt, wobei der Temperiermittelstrom in der dargestellten Ausführung zentral auf den Kühlkörper 9 auftrifft. Das Kühlmittel umströmt die Kühlrippen 9b und wird von diesen in Richtung Temperiermittelabflusskanal 7 geleitet, über den das Temperiermittel entgegen der Strömungsrichtung des Temperiermittelzuflusskanals 6 das Gehäuse 2 verlässt. Der Temperiermittelabflusskanal 7 dient in der dargestellten Ausführung zur Rückführung des Temperiermittels aus beiden Temperiermittelzuflusskanälen 6. Grundsätzlich können aber auch für die über beide Temperiermittelzuflusskanäle 6 zugeführten Temperiermittel separate Temperiermittelabflusskanäle 7 vorgesehen werden. Beispielsweise kann hierfür eine in Längsrichtung des Gehäuses angeordnete Trennwand genutzt werden. Eine derartige Trennwand ist aber nicht dargestellt.

Das Wärmeleitteil 9a des Kühlkörpers 9 ist in die Wölbung der Werkstoffprobe 4 eingepasst, sodass im jeweiligen Messbereich 5 ein vollflächiger thermischer Übergang sichergestellt wird. Das Wärmeleitteil 9a ist aus Kupfer und die Kühlrippen 9b sind aus Aluminium gebildet. In dem Wärmeleitteil 9a jedes Messbereichs 5 sind jeweils drei Aufnahmen 12 für Temperatursensoren vorgesehen, die an der Innenseite 8 der Werkstoffprobe 4 am betreffenden Messbereich 5 anliegen und damit in dieser Position fixiert sind. Die Temperatursensoren selbst sind nicht dargestellt.

Die Temperiermittelzuflusskanäle 6 sind in der gezeigten Ausführung unabhängig voneinander regelbar. Damit können auch zwei identische Werkstoffproben 4 bei unterschiedlichen Temperaturen getestet werden, wobei die Temperatur der jeweiligen Werkstoffprobe vorzugsweise über die Temperiermittelstromdichte eingestellt wird.

Wie oben beschrieben, ist bei der in den **Fig. 1** bis **Fig. 6** dargestellten Ausführungsform eine Aufnahme für zwei Werkstoffproben 4 vorgesehen. Die Erfindung ist aber nicht hierauf beschränkt. Genauso kann auch nur eine Werkstoffprobe 4 vorgesehen sein, wobei dann nur ein Temperiermittelzuflusskanal 6 nötig ist. Ebenso kann die Sonde 1 auch so ausgebildet sein, dass mehr als zwei Werkstoffproben 4 getestet werden können. Hierzu ist die Anzahl der Kühlkörper 9 und der Temperiermittelzuflusskanäle 6 entsprechend der Anzahl der Werkstoffproben 4 zu erhöhen. Zur Rückführung des Temperiermittels können entweder ein gemeinsam genutzter Temperiermittelabflusskanal 7 oder separate Temperiermittelabflusskanäle 7 vorgesehen sein. Beispielsweise kann die Sonde 1 für vier Werkstoffproben 4 ausgelegt sein, wobei diese dann beispielsweise in einer 2x2 Anordnung positioniert sein können. Weiterhin sind beispielsweise auch acht Werkstoffproben 4 mit einer 4x2 oder 2x4 Anordnung denkbar.

### Bezugszeichenliste

- 1: Sonde
- 2: Gehäuse
- 3: Stirnseite
- 4: Werkstoffprobe
- 5: Messbereich
- 6: Temperiermittelzuflusskanal
- 7: Temperiermittelabflusskanal
- 8: Innenseite
- 9: Kühlkörper
- 9a: Wärmeleitteil
- 9b: Kühlrippen
- 10: Düsenanordnung
- 11: Düsenöffnung
- 12: Aufnahme

## Patentansprüche

1. Sonde (1) zur Messung der Veränderung von Werkstoffen durch Gasströme in Dampferzeugern oder anderen Verbrennungsanlagen, wobei die Sonde (1) einen Temperiermittelzuflusskanal (6), einen Temperiermittelabflusskanal (7), eine Werkstoffprobenaufnahme mit einem Kühlkörper (9) und eine Werkstoffprobe (4) mit einem Messbereich (5) aufweist und wobei der Kühlkörper (9) auf einer den Gasströmen abgewandten Innenseite (8) der Werkstoffprobe (4) angeordnet und thermisch mit dieser verbunden ist und wobei der Kühlkörper (9) mit einem über den Temperiermittelzuflusskanal (6) zugeführten Temperiermittel beaufschlagbar ist, wobei der Kühlkörper (9) in dem Messbereich (5) vollflächig thermisch mit der Innenseite (8) der Werkstoffprobe (4) verbunden ist und wobei der Kühlkörper (9) in dem Messbereich (5) vollflächig an der Innenseite (8) der Werkstoffprobe (4) anliegt oder über ein Wärmekoppelmedium vollflächig thermisch mit der Innenseite (8) des Werkstoffprobe (4) verbunden ist, **dadurch gekennzeichnet, dass** der Kühlkörper (9) auf einer der Innenseite (8) der Werkstoffprobe (4) zugewandten Seite ein massives Wärmeleitteil (9a) und auf einer dem Temperiermittelzuflusskanal (6) zugewandten Seite angeordnete Kühlrippen (9b) aufweist.

2. Sonde nach Anspruch 1, **dadurch gekennzeichnet,**
**dass** die Kühlrippen (9b) in Richtung Temperiermittelzuflusskanal (6) ausgerichtet sind.

3. Sonde nach Anspruch 1, **dadurch gekennzeichnet,**
**dass** das Wärmeleitteil (9a) und die Kühlrippen (9b) aus demselben Material oder unterschiedlichem Material gebildet sind.

4. Sonde nach Anspruch 3, **dadurch gekennzeichnet,**
**dass** das Wärmeleitteil (9a) aus Kupfer und die Kühlrippen (9b) aus Aluminium gebildet sind.

5. Sonde nach Anspruch 1, **dadurch gekennzeichnet,**
**dass** das Wärmeleitteil (9a) Aufnahmen (12) aufweist, die geeignet sind, an der Innenseite (8) der Werkstoffprobe (4) anliegende Temperatursensoren aufzunehmen.

6. Sonde nach einem der vorhergehenden Ansprüche, **dadurch gekennzeichnet, dass** ein dem Kühlkörper (9) zugewandtes Ende des Temperiermittelzuflusskanals (6) eine sich in Strömungsrichtung verjüngende Düsenanordnung (10) aufweist und eine Düsenöffnung (11) dieser Düsenanordnung (10) in Richtung Kühlkörper (9) ausgerichtet ist.

7. Sonde nach einem der vorhergehenden Ansprüche, **dadurch gekennzeichnet, dass** der Temperiermittelzuflusskanal (6) eine Rohrleitung ist und der Temperiermittelabflusskanal (7) von einer Innenfläche eines Gehäuses (2) der Sonde (1) und einer Außenmantelfläche der Rohrleitung gebildet wird.

8. Sonde nach einem der vorhergehenden Ansprüche, **dadurch gekennzeichnet, dass** die Werkstoffprobenaufnahme eine Ausnehmung in einem Gehäuse (2) der Sonde (1) ist.

9. Sonde nach einem der vorhergehenden Ansprüche, **dadurch gekennzeichnet, dass** die Werkstoffprobe (4) eine in Richtung Gasströme gewölbte Oberfläche aufweist.

10. Sonde nach einem der vorhergehenden Ansprüche, **dadurch gekennzeichnet, dass** der Temperiermittelzuflusskanal (6) und der Temperiermittelabflusskanal (7) ausgebildet sind, Druckluft als Temperiermittel zu führen.

## Claims

1. A probe (1) for measuring the change in materials caused by gas flows in steam generators or other combustion systems, wherein the probe (1) has a temperature control medium inflow channel (6), a temperature control medium outflow channel (7), a material sample holder with a heat sink (9) and a material sample (4) with a measurement area (5) and wherein the heat sink (9) is located on an inner side (8) of the material sample (4) facing away from the gas flows and is thermally connected thereto and wherein the heat sink (9) can be acted upon by a temperature control medium supplied via the temperature control medium inflow channel (6), wherein the heat sink (9) in the measurement area (5) is in full thermal contact with the inner side (8) of the material sample (4) and wherein the heat sink (9) in the measurement area (5) is in full contact with the inner side (8) of the material sample (4) or is in full thermal contact with the inner side (8) of the material sample (4) via a heat coupling medium, **characterised in that** the heat sink (9) has a solid heat conducting part (9a) on a side facing the inner side (8) of the material sample (4) and cooling fins (9b) located on a side facing the temperature control medium inflow channel (6).

2. A probe according to claim 1, **characterised in that** the cooling fins (9b) are aligned in the direction of the temperature control medium inflow channel (6).

3. A probe according to claim 1, **characterised in that** the heat conducting part (9a) and the cooling fins (9b) are formed of the same material or different material.

4. A probe according to claim 3, **characterised in that** the heat conducting part (9a) is formed of copper and the cooling fins (9b) are formed of aluminium.

5. A probe according to claim 1, **characterised in that** the heat conducting part (9a) has holders (12) which are suitable for holding temperature sensors in contact with the inner side (8) of the material sample (4).

6. A probe according to one of the preceding claims, **characterised in that** an end of the temperature control medium inflow channel (6) facing the heat sink (9) has a nozzle arrangement (10) tapering in the direction of flow and a nozzle opening (11) of this nozzle arrangement (10) is aligned in the direction of the heat sink (9).

7. A probe according to one of the preceding claims, **characterised in that** the temperature control medium inflow channel (6) is a pipeline and the temperature control medium outflow channel (7) is formed by an inner surface of a housing (2) of the probe (1) and an outer jacket surface of the pipeline.

8. A probe according to one of the preceding claims, **characterised in that** the material sample holder is a recess in a housing (2) of the probe (1).

9. A probe according to one of the preceding claims, **characterised in that** the material sample (4) has a surface curved in the direction of the gas flows.

10. A probe according to one of the preceding claims, **characterised in that** the temperature control medium inflow channel (6) and the temperature control medium outflow channel (7) are designed to carry compressed air as temperature control medium.

## Revendications

1. Sonde (1) pour mesurer l'altération de matériaux par des flux de gaz dans des générateurs de vapeur ou d'autres installations de combustion, la sonde (1) comprenant un canal d'entrée d'agent de régulation de la température (6), un canal de sortie d'agent de régulation de la température (7), un logement d'échantillon de matériau avec un dissipateur thermique (9) et un échantillon de matériau (4) avec une zone de mesure (5), le dissipateur thermique (9) étant disposé sur une face intérieure (8) de l'échantillon de matériau (4) opposée aux flux de gaz et relié thermiquement à celui-ci, le dissipateur thermique (9) pouvant être alimenté par un agent de régulation de température acheminé par le canal d'entrée d'agent de régulation de la température (6), le dissipateur thermique (9) dans la zone de mesure (5) étant relié thermiquement sur toute sa surface à la face intérieure (8) de l'échantillon de matériau (4), et le dissipateur thermique (9) de la zone de mesure (5) étant en contact sur toute sa surface avec la face intérieure (8) de l'échantillon de matériau (4) ou étant relié thermiquement sur toute sa surface à la face intérieure (8) de l'échantillon de matériau (4) par l'intermédiaire d'un milieu de couplage thermique, **caractérisée en ce que** le dissipateur thermique (9) présente une pièce massive conductrice de chaleur (9a) sur une face orientée vers la face intérieure (8) de l'échantillon de matériau (4) et des ailettes de refroidissement (9b) disposées sur une face orientée vers le canal d'entrée d'agent de régulation de la température (6).

2. Sonde conformément à la revendication 1, **caractérisée en ce que** les ailettes de refroidissement (9b) sont dirigées vers le canal d'entrée d'agent de régulation de la température (6).

3. Sonde conformément à la revendication 1, **caractérisée en ce que** la pièce conductrice de chaleur (9a) et les ailettes de refroidissement (9b) sont constituées du même matériau ou de matériaux différents.

4. Sonde conformément à la revendication 3, **caractérisée en ce que** la pièce conductrice de chaleur (9a) est réalisée en cuivre et les ailettes de refroidissement (9b) sont réalisées en aluminium.

5. Sonde conformément à la revendication 1, **caractérisée en ce que** la pièce conductrice de chaleur (9a) comporte des logements (12) permettant de recevoir des capteurs de température situés contre la face intérieure (8) de l'échantillon de matériau (4).

6. Sonde conformément à l'une des revendications précédentes, **caractérisée en ce qu'**une extrémité du canal d'entrée d'agent de régulation de la température (6) orientée vers le dissipateur thermique (9) présente un agencement de buses (10) se rétrécissant dans le sens de l'écoulement, et **en ce qu'**une ouverture de buse (11) de cet agencement de buses (10) est orientée vers le dissipateur thermique (9).

7. Sonde conformément à l'une des revendications précédentes, **caractérisée en ce que** le canal d'entrée d'agent de régulation de la température (6) est une conduite et que le canal de sortie d'agent de régulation de la température (7) est constitué d'une surface intérieure d'un boîtier (2) de la sonde (1) et d'une surface enveloppe extérieure de la conduite.

8. Sonde conformément à l'une des revendications précédentes, **caractérisée en ce que** le logement d'échantillon de matériau est une cavité dans un boîtier (2) de la sonde (1).

9. Sonde conformément à l'une des revendications précédentes, **caractérisée en ce que** l'échantillon de matériau (4) présente une surface incurvée dans la direction des flux de gaz.

10. Sonde conformément à l'une des revendications précédentes, **caractérisée en ce que** le canal d'entrée d'agent de régulation de la température (6) et le canal de sortie d'agent de régulation de la température (7) sont conçus pour transporter de l'air comprimé en tant qu'agent de régulation de la température.
